# EUROPÄISCHE PATENTSCHRIFT

(11) **EP 3 661 610 B1**
(45) Veröffentlichungstag und Bekanntmachung des Hinweises auf die Patenterteilung: **03.06.2026**
(21) Anmeldenummer: 18762227.9
(22) Anmeldetag: 01.08.2018
(51) Int. Cl.: A62C 35/68, F16K 37/00

(54) **FEUERLÖSCHANLAGENVENTIL**
FIRE EXTINGUISHING SYSTEM VALVE
VANNE DE SYSTÈME D'EXTINCTION D'INCENDIE

(30) Priorität: 01.08.2017 DE 102017117426
(43) Veröffentlichungstag der Anmeldung: 10.06.2020
(73) Patentinhaber: Minimax GmbH, 23843 Bad Oldesloe (DE)
(72) Erfinder: KEMPF, Peter, 23843 Bad Oldesloe (DE); STACHOWITZ, Frank, 23909 Ratzeburg (DE)
(74) Vertreter: Eisenführ Speiser
(86) Internationale Anmeldenummer: PCT/EP2018/070885
(87) Internationale Veröffentlichungsnummer: WO 2019/025496

(56) Entgegenhaltungen:
- US-A1- 2012 103 637
- US-B1- 6 246 331
- US-B2- 8 290 631

## Beschreibung

Die Erfindung betrifft ein Feuerlöschanlagenventil gemäß den Merkmalen des Oberbegriffs von Anspruch 1.

Unter Feuerlöschanlagenventilen wird im Sinne der vorliegenden Erfindung insbesondere die Gattung passiver Alarmventile verstanden, die für den Einsatz in Alarmventilstationen von Feuerlöschanlagen, speziell Feuerlöschanlagen mit wasserbasierten Löschmitteln (beispielsweise Wasser, Wasser mit Zusätzen, Wassernebel im Nieder- und Hochdruckbereich) konzipiert sind. Bekannte Vertreter dieser Ventiltypen bei Feuerlöschanlagen mit wasserbasierten Löschmitteln sind Nass- und Trockenalarmventile, sowie Sprühwasserventile.

Man versteht unter passiven Alarmventilen solche Ventile, die bei Überschreiten einer vorgegebenen Druckdifferenz zwischen Eintritts- und Austrittsseite selbsttätig öffnen. Solche bekannten passiven Feuerlöschanlagenventile trennen mittels einer Rückschlagklappe das Rohrnetz einer Sprinkler-Löschanlage in ein wasserführendes Rohrnetz und in ein Sprinkler-Rohrnetz. In der Regel verfügen die Ventile selbst über eine Funktionalität zur Auslösung eines Alarms in Reaktion auf ein Erfassen dieses Öffnungszustandes. Dieses wird im Stand der Technik insbesondere realisiert mittels eines in einem externen Alarmkanal (Nebenstrom) angeordneten Druckschalters. Über einen solchen Druckschalter wird dann etwa eine elektrisch betriebene Alarmhupe oder dgl. angesteuert.

Gemäß Standards der National Fire Protection Association (NFPA), die sich u.a. der Standardisierung im Bereich des Brandschutzes für die Vereinigten Staaten von Amerika widmet, ist es möglich, im Einflussbereich der betreffenden Normen ein Ventil, wie oben beschrieben, durch ein Ventil zu ersetzen, welches eine Rückschlagklappe in Verbindung mit einer Alarmfunktionalität aufweist.

Im Stand der Technik sind zu diesem Zweck insbesondere Alarmventile offenbart, bei denen die Alarmfunktionalität über einen Strömungswächter realisiert wird, der in dem Ventilkörper angeordnet ist. Dieser Strömungswächter ist insbesondere gerichtet auf die Erfassung eines Volumenstroms durch das Alarmventil und misst somit indirekt, inwieweit sich der Schließkörper des Ventils in einem geschlossenen Zustand (Sperrzustand) befindet oder inwieweit sich der Sperrkörper in einer Freigabestellung befindet und somit Fluid durch das Ventil strömt.

Diese indirekte Strömungsmessung mittels Messung des Volumenstromes kann jedoch den Nachteil mit sich bringen, dass eine Fehlfunktion des Volumenstrommessers dazu führt, dass ein einsetzender Volumenstrom nicht detektiert wird und somit kein Alarm generiert wird. Auch bringt die Wartung eines solchen Durchflusssensors einige Nachteile mit sich, da je nach Ventiltyp zumeist das Gehäuse vollständig zu demontieren ist, um den Sensor überprüfen und austauschen zu können.

US 6 246 331 B1 offenbart eine Vorrichtung zur magnetischen Sensierung eines Fluidflusses, in dem die Sensorvorrichtung ein elektrisches Signal generiert, wenn ein Schließkörper eines Rückschlagventils seine Sperrposition verlässt.

US 8 290 631 B2 bezieht sich auf Ventilstellungssensoren sowie ein Verfahren und eine Vorrichtung zur Regelung der Ventilstellungssensorenredundanz. Zur Erfassung der Ventilstellung wird mehr als ein Sensor verwendet, um eine Redundanz bei der Positionserfassung zu schaffen.

Der Erfindung lag folglich die Aufgabe zugrunde, ein Feuerlöschanlagenventil bereitzustellen, welches die im Stand der Technik bekannten Nachteile zumindest teilweise überwindet. Insbesondere lag der Erfindung die Aufgabe zugrunde, ein Feuerlöschanlagenventil anzugeben, welches eine erhöhte Zuverlässigkeit bezüglich der Alarmgenerierung und eine vereinfachte Wartbarkeit bietet.

Die Erfindung löst die ihr zugrunde liegende Aufgabe bei einer Vorrichtung der eingangs bezeichneten Art gemäß dem Gegenstand von Anspruch 1.

Unter "unmittelbar" wird im Rahmen dieses Schutzrechtes verstanden, dass mittels der Sensorvorrichtung eine direkte Überwachung der Position des Schließkörpers erfolgt. Es wird folglich nicht anhand von Messgrößen, wie beispielsweise dem Druck in den Fluidein- und austrittskammern, dem Durchfluss oder dergleichen, auf die Position des Schließkörpers rückgeschlossen, sondern vielmehr dessen Position selbst (vorzugsweise kontinuierlich) und direkt überwacht.

Die Erfindung folgt damit dem Ansatz, die Alarmfunktionsgebung des Feuerlöschanlagenventils unmittelbar an dem für einen Durchfluss bzw. für eine Verhinderung desselben maßgeblichen Bauteils zu stützen. Die potenzielle Fehlerquelle der indirekten Zustandsmessung wird damit umgangen.

Vorzugsweise ist die Sensorvorrichtung innerhalb des Gehäuses, insbesondere teilweise oder vollständig in der Fluideintrittskammer oder der Fluidaustrittskammer angeordnet.

In einer bevorzugten Ausführungsform wird das Feuerlöschanlagenventil dadurch weitergebildet, dass die Sensorvorrichtung dazu eingerichtet ist, ein elektrisches Signal zu generieren, wenn der Schließkörper seine Sperrposition verlässt, insbesondere wenn Fluid durch das Alarmventil strömt.

In einer weiteren bevorzugten Ausführungsform weist die Sensorvorrichtung ferner eine Verzögerungseinrichtung zur Verzögerung einer Weiterleitung des elektrischen Signals um eine vordefinierte Verzögerungsdauer auf, wobei die Verzögerungseinrichtung vorzugsweise dazu eingerichtet ist, das elektrische Signal weiterzuleiten, wenn die Sensorvorrichtung für eine vordefinierte Mindestdauer das Verlassen der Sperrposition durch den Schließkörper sensiert. Hierdurch wird sichergestellt, dass Druckschwankungen im Feuerlöschsystem nicht unmittelbar zur Auslösung von Alarmen bzw. Fehlalarmen führen, sondern ein Alarm erst dann generiert wird, wenn der Schließkörper für eine definierte Zeit und ununterbrochen geöffnet ist. Die Verzögerungsdauer lässt sich zielführend an eine gegebene Feuerlöschanlage anpassen.

Vorzugsweise weist das Feuerlöschanlagenventil eine Aussparung zur Aufnahme der Sensorvorrichtung auf, welche eine Öffnung zu der Fluideintrittskammer oder der Fluidaustrittskammer freigibt, wobei die Sensorvorrichtung in der Aussparung angeordnet ist und die Aussparung fluiddicht verschließt. Eine solche Anordnung der Sensorvorrichtung ermöglicht zum einen eine einfache Wartbarkeit, da einzelne Sensoren oder die gesamte Sensorvorrichtung leicht dem Gehäuse entnommen werden können.

Vorzugsweise weist das Feuerlöschanlagenventil mindestens zwei Sensoren zur redundanten Positionsüberwachung des Schließkörpers auf. Da die Alarmauslösung als insgesamt hochgradig sicherheitsrelevant zu bewerten ist, ermöglicht eine solche redundante Auslegung die Erhöhung der Ausfallsicherheit und der Alarmgenerierungszuverlässigkeit eines solchen Feuerlöschanlagenventils.

Es sei hier angemerkt, dass in Hochsicherheitsumgebungen darüber hinaus auch die Verwendung von drei Sensoren angezeigt sein kann. Eine solche Verwendung von drei Sensoren bringt ergänzend den Vorteil mit sich, dass ein defekter Sensor leicht zu erkennen und zu isolieren ist. So würde sich bei einem Ausfall von einem der drei Sensoren beispielsweise der Fall einstellen, dass ein defekter Sensor fälschlicherweise einen geschlossenen Schließkörper sensiert, wohingegen zwei der drei Sensoren korrekt einen geöffneten Schließkörper anzeigen. Ein Vergleich der drei Messwerte ermöglicht es nun, den defekten Sensor zu isolieren. Durch diese Maßnahme kann damit insgesamt die Ausfallwahrscheinlichkeit und auch die Alarmierungszuverlässigkeit des Feuerlöschanlagenventils weiter erhöht werden. Ergänzend oder alternativ weist der einzelne Sensor, oder einer, mehrere oder sämtliche der mehreren Sensoren zur Detektion eines Sensordefekts weiterhin eine Drahtbruch-Kurzschluss-Überwachung auf.

In einer bevorzugten Ausführungsform weist die Sensorvorrichtung mindestens einen Magnetsensor auf. Der Magnetsensor weist weiter vorzugsweise einen oder mehrere Reed-Kontakte auf. In alternativen bevorzugten Ausführungsformen ist der Magnetsensor ein Hall-Sensor oder ein magnetoresistiver Sensor. Es ist erkannt worden, dass Magnetsensoren überraschend vorteilhaft zur Überwachung von Schließzuständen in Feuerlöschanlagenventilen eingesetzt werden können. Insbesondere die Verwendung eines Magnetsensors umfassend einen oder mehrere Reed-Kontakte hat sich wider Erwarten als besonders vorteilhaft dargestellt, obwohl der Sensor, insbesondere bei einer Integration in das Gehäuse des Feuerlöschanlagenventils, permanent in Kontakt mit Löschfluid steht und hohen Drücken im Bereich von bis zu 32 bar ausgesetzt ist. Der Reed-Kontakt hat sich als ausreichend robust erwiesen. Ein weiterer Vorteil des Reed-Kontaktes ist dessen gutes Ansprechverhalten bereits auf geringe Bewegungsamplituden des Schließkörpers, sowie sein einfacher Aufbau und eine klare Signalstruktur: Je nach Öffnungs- oder Schließzustand des Reed-Kontakts gibt der Magnetsensor ein 0/1-Signal aus, was eine Interpretation hinsichtlich des Zustands des Schließkörpers besonders einfach macht.

In einer bevorzugten Ausführungsform weist die Sensorvorrichtung mindestens einen induktiven Sensor zur Positionsüberwachung des Schließkörpers auf, wobei der Schließkörper einen metallischen Abschnitt aufweist, welcher bei Bewegung des Schließkörpers zur Generierung einer elektrischen Spannung in dem induktiven Sensor eingerichtet ist. Die Verwendung eines solchen induktiven Sensors kann insbesondere dann vorteilhaft sein, wenn das betreffende, durch das Ventil strömende Fluid, beispielsweise nur sehr wenig oder nicht lichtdurchlässig ist, und somit die die Verwendung insbesondere optischer Sensoren unmöglich ist.

Die Sensorvorrichtung weist vorzugsweise alternativ oder zusätzlich mindestens einen optischen Sensor zur Positionsüberwachung des Schließkörpers auf, wobei an dem Schließkörper ein optischer Reflektor zur Interaktion mit dem optischen Sensor angeordnet ist, insbesondere zur Reflexion eines von dem optischen Sensor generierten optischen Signals zurück zu dem Sensor zur Überwachung der Position des Schließkörpers. Unter optischen Sensoren werden hier alle Sensoren verstanden, die Licht im sichtbaren und unsichtbaren Bereich zur Überwachung der Position des Schließkörpers verwenden. Hierbei ist explizit auch die Verwendung von kohärentem Licht, wie beispielsweise Laserlicht, eingeschlossen.

Die Sensorvorrichtung weist vorzugsweise mindestens einen kapazitiven Sensor zur Positionsüberwachung des Schließkörpers auf. In einer alternativen Ausführungsform weist das Feuerlöschanlagenventil mindestens einen Winkelsensor zur Positionsüberwachung des Schließkörpers auf, wobei ein korrespondierender Drehwinkelgeber insbesondere an der Achse des Schließkörpers angeordnet ist.

Im Rahmen dieses Schutzrechts wird unter einer Anordnung an der Achse des Schließkörpers verstanden, dass der Drehwinkelgeber an jeder beliebigen Position an dem Schließkörper in Bezug auf dessen Drehachse so angeordnet werden kann, dass eine Winkelmessung der Position des Schließkörpers gegenüber einer statischen Referenz möglich wird.

Erfindungsgemäß weist die Sensorvorrichtung mindestens zwei unterschiedliche Sensoren, ausgewählt aus der Liste: Magnetsensor, induktiver Sensor, optischer Sensor, kapazitiver Sensor und Drehwinkelsensor, auf. Durch eine solche Kombination unterschiedlicher Sensoren und Messprinzipien kann ferner die Messgenauigkeit und damit die Alarmierungsgenauigkeit erhöht werden. Auch lässt sich das Risiko von Fehlalarmen durch eine solche Kombination unterschiedlicher Sensoren reduzieren.

In einer bevorzugten Ausführungsform weist das Feuerlöschanlagenventil einen mit dem Schließkörper korrespondierend ausgebildeten Ventilsitz auf, der in dem Gehäuse zwischen der Fluideintrittskammer und der Fluidaustrittskammer angeordnet ist. Der Ventilsitz weist vorzugsweise eine Symmetrieachse auf, und einen senkrecht zur Symmetrieachse kreisförmigen Öffnungsquerschnitt, der den Fluiddurchgang zwischen Fluideintrittskammer und Fluidaustrittskammer definiert. Der Schließkörper ist aufgrund seiner korrespondierenden Ausbildung ebenfalls mit einem symmetrischen, kreisförmigen Querschnitt ausgebildet. Ein besonderer Vorteil des erfindungsgemäßen Sensorprinzips kommt hier zum Tragen: Es ist möglich, die vorstehend beschrieben bevorzugten Sensortypen im Feuerlöschanlagenventil einzurüsten, ohne eine modifizierte Geometrie des Schließkörpers und/oder Ventilsitzes, etwa in Form von Vorsprüngen und/oder Ausnehmungen, vorsehen zu müssen. Hierdurch wird die Fluidströmung von der Fluideintrittskammer in die Fluidaustrittskammer nicht durch die Sensorvorrichtung beeinflusst. Die Sensorvorrichtung ist gemäß der vorliegenden Erfindung besonders bevorzugt berührungsfrei relativ zum Schließkörper des Feuerlöschanlagenventils angeordnet.

Die Erfindung ist bislang in einem ersten Aspekt unter Bezugnahme auf ein Feuerlöschanlagenventil beschrieben worden. In einem weiteren Aspekt betrifft die Erfindung allerdings auch ein Verfahren zur Überwachung der Position eines Schließkörpers eines Feuerlöschanlagenventils, insbesondere nach einer der vorstehend beschriebenen bevorzugten Ausführungsformen, mit einem Gehäuse, einer in dem Gehäuse vorgesehenen Fluideintrittskammer, einer in dem Gehäuse vorgesehenen Fluidaustrittskammer, wobei der Schließkörper zwischen einem Sperrzustand und einem Freigabezustand hin und her bewegbar ist, im Sperrzustand eine unmittelbare Fluidströmung zwischen der Fluideintrittskammer und der Fluidaustrittskammer unterbindet und in der Freigabestellung die Fluideintrittskammer mit der Fluidaustrittskammer unmittelbar fluidleitend verbindet.

Die Erfindung löst die eingangs genannte Aufgabe, indem das Verfahren umfasst:
- unmittelbares redundantes Überwachen der Position des Schließkörpers mittels zweier unterschiedlicher Sensoren, welche ausgewählt sind aus der Liste: Magnetsensor, induktiver Sensor, optischer Sensor, kapazitativer Sensor und Drehwinkelsensor,
- Erzeugen eines repräsentativen Signals mittels der Sensorvorrichtung, sobald der Schließkörper sich vom Sperrzustand in den Freigabezustand bewegt, und vorzugsweise:
- Weiterleiten des repräsentativen Signals an eine Auswerteinheit, insbesondere eine Brandmelde- und/oder Löschsteuerzentrale.

Das Verfahren umfasst besonders bevorzugt die Nutzung eines Magnetsensors für die Überwachung, wobei der Magnetsensor besonders bevorzugt einen oder mehrere Reed-Kontakte aufweist.

Die Erfindung betrifft ferner eine Verwendung eines Magnetsensors zur Überwachung der Position eines Schließkörpers eines Feuerlöschanlagenventils, insbesondere nach einer der vorstehend beschriebenen bevorzugten Ausführungsformen.

Die Vorteile und bevorzugten Ausführungsformen des Feuerlöschanlagenventils sind zugleich Vorteile und bevorzugten Ausführungsformen des Verfahrens und der Verwendung.

Die Erfindung wird im Folgenden unter Bezugnahme auf die beigefügten Figuren anhand bevorzugter Ausführungsbeispiele näher beschrieben. Hierbei zeigen:

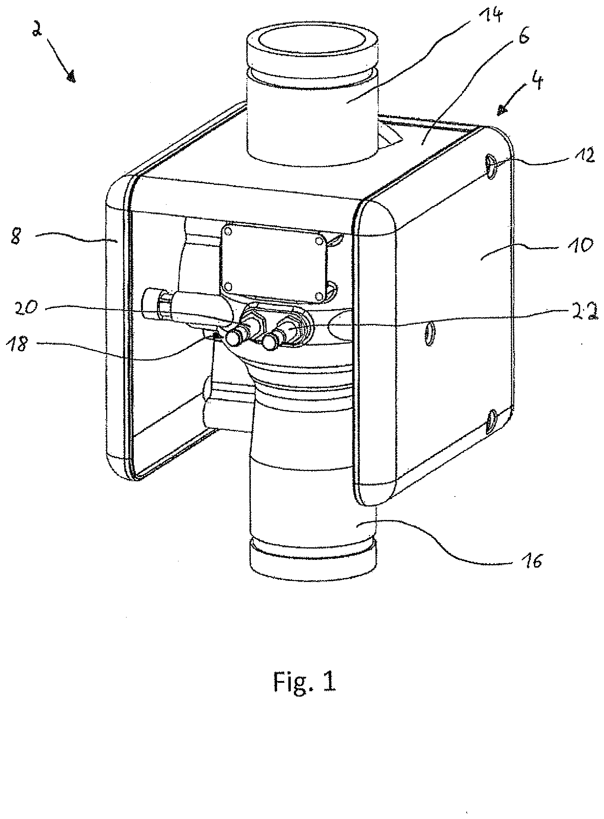

- Fig. 1: eine perspektivische Ansicht eines Ausführungsbeispiels eines erfindungsgemäßen Feuerlöschanlagenventils,
- Fig. 2: eine Schnittansicht des Ausführungsbeispiels des erfindungsgemäßen Feuerlöschanlagenventils aus Fig. 1.

Das Feuerlöschanlagenventil 2 weist ein Gehäuse 4 auf, welches einen Grundkörper 6, eine ersten Seitenverkleidung 8 sowie eine zweite Seitenverkleidung 10 aufweist. Die erste Seitenverkleidung 8 und die zweite Seitenverkleidung 10 sind an dem Grundkörper 6 mittels der Verschraubungen 12 angebracht. Das Feuerlöschanlagenventil 2 ist mittels des Fluideinlasses 16 an das wasserführende bzw. fluidführende Rohrnetz angebunden. Über den Fluideinlass 16 tritt demnach Fluid in das Feuerlöschanlagenventil 2 ein. Aus dem Fluidauslass 14 tritt das Fluid schließlich aus dem Feuerlöschanlagenventil 2 aus und in das Rohrnetz mit Sprinklern oder Düsen ein. In dem Grundkörper 6 angeordnet ist ferner die Sensorvorrichtung 18, die zumindest einen Sensor 20 aufweist, vorzugsweise einen Magnetsensor mit einem oder mehreren Reed-Kontakten oder alternative einen der Sensoren der weiter oben beschriebenen bevorzugten Ausführungsformen, und exemplarisch im hier dargestellten Ausführungsbeispiel einen ersten Sensor 20 sowie einen zweiten Sensor 22 aufweist.

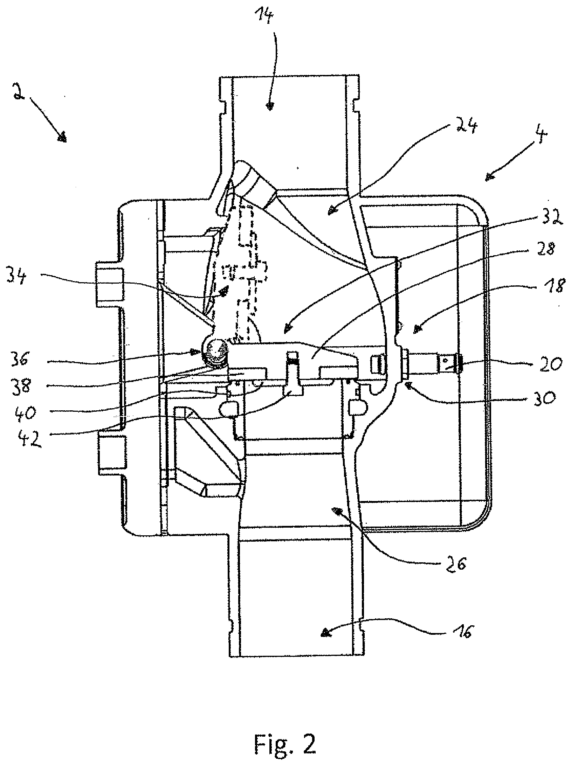

Anhand der Fig. 2 werden nachfolgend Funktion und Aufbau des Feuerlöschanlagenventils 2 näher detailliert. In bereits bekannter Weise gelangt Fluid mittels des Fluideinlasses 16 in eine Fluideintrittskammer 26. Fließt kein Fluid durch das Feuerlöschanlagenventil 2, so befindet sich der Schließkörper 28 in einer Sperrposition 32. Der Schließkörper 28 weist eine Dichtung 38 auf, die mittels einer Scheibe 40 und einer Verschraubung 42 an dem Schließkörper befestigt ist. Der Schließkörper 28 wird schließlich mittels einer Schließkörperachse 36 drehbar gelagert. In diesem Zusammenhang ist in Fig. 2 ebenfalls ein vollständig geöffneter Zustand des Schließkörpers 28 dargestellt (Position 34). In unmittelbarer Nähe zum Schließkörper 28 ist die Sensorvorrichtung 18 angeordnet. Diese Sensorvorrichtung 18 ist in eine Gehäuseaussparung 30 eingesetzt und mit dieser fluiddicht verbunden. Aufgrund der in Fig. 2 gewählten Schnittebene ist lediglich ein erster Sensor 20 sichtbar.

Die Sensorvorrichtung 18 überwacht nun die Position des Schließkörpers 28. Mittels eines oder mehrerer, gleicher oder unterschiedlicher, Sensoren (In Form von Magnetsensoren, induktiv, optisch, kapazitiv oder drehwinkelbasiert) wird immer dann ein Alarm generiert, wenn der Schließkörper 28 seine vollständig geschlossene Sperrposition verlässt. Es sei angemerkt, dass insbesondere an dem Schließkörper 28 verschiedene sensorspezifische Geber angeordnet sein können (beispielsweise ein optischer Reflektor, ein Magnet, ein Drehwinkelgeber, und dgl.), die in Fig. 2 nicht separat dargestellt sind.

### Bezugszeichen

- 2: Feuerlöschanlagenventil
- 4: Gehäuse
- 6: Grundkörper
- 8: Erste Seitenverkleidung
- 10: Zweite Seitenverkleidung
- 12: Verschraubung
- 14: Fluidauslass
- 16: Fluideinlass
- 18: Sensorvorrichtung
- 20: Erster Sensor
- 22: Zweiter Sensor
- 24: Fluidaustrittskammer
- 26: Fluideintrittskammer
- 28: Schließkörper
- 30: Gehäuseaussparung
- 32: Schließkörper in Sperrposition
- 34: Schließkörper in Freigabeposition
- 36: Schließkörperachse
- 38: Dichtung
- 40: Scheibe
- 42: Verschraubung

## Patentansprüche

1. Feuerlöschanlagenventil (2), mit
einem Gehäuse (4),
einer in dem Gehäuse (4) vorgesehenen Fluideintrittskammer (26),
einer in dem Gehäuse (4) vorgesehenen Fluidaustrittskammer (24),
einem zwischen einem Sperrzustand (32) und einem Freigabezustand (34) hin und her bewegbaren Schließkörper (28), welcher im Sperrzustand (32) eine unmittelbare Fluidströmung zwischen der Fluideintrittskammer (26) und der Fluidaustrittskammer (24) unterbindet und in der Freigabestellung (34) die Fluideintrittskammer (26) mit der Fluidaustrittskammer (24) unmittelbar fluidleitend verbindet,
wobei das Feuerlöschanlagenventil (2) eine Sensorvorrichtung (18) zur unmittelbaren Überwachung der Position des Schließkörpers (28) aufweist,
**dadurch gekennzeichnet, dass** die Sensorvorrichtung (18) mindestens zwei unterschiedliche Sensoren (20, 22) zur redundanten Positionsüberwachung des Schließkörpers (28) aufweist, ausgewählt aus der Liste: Magnetsensor, induktiver Sensor, optischer Sensor, kapazitativer Sensor und Drehwinkelsensor.

2. Feuerlöschanlagenventil nach Anspruch 1,
**dadurch gekennzeichnet, dass** die Sensorvorrichtung (18) mindestens einen Magnetsensor aufweist.

3. Feuerlöschanlagenventil nach Anspruch 2,
**dadurch gekennzeichnet, dass** der Magnetsensor einen oder mehrere Reed-Kontakte aufweist, oder
als Hall-Sensor oder als magnetoresistiver Sensor ausgebildet ist.

4. Feuerlöschanlagenventil nach einem der vorstehenden Ansprüche,
**dadurch gekennzeichnet, dass** die Sensorvorrichtung (18) mindestens einen induktiven Sensor zur Positionsüberwachung des Schließkörpers (28) aufweist, und der Schließkörper (28) einen metallischen Abschnitt aufweist, welcher bei Bewegung des Schließkörpers (28) zur Generierung einer elektrischen Spannung in dem induktiven Sensor eingerichtet ist.

5. Feuerlöschanlagenventil (2) nach einem der vorhergehenden Ansprüche,
**dadurch gekennzeichnet, dass** die Sensorvorrichtung (18) mindestens einen optischen Sensor zur Positionsüberwachung des Schließkörpers (28) aufweist, wobei an dem Schließkörper (28) ein optischer Reflektor zur Interaktion mit dem optischen Sensor angeordnet ist, insbesondere zur Reflexion eines von dem optischen Sensor generierten optischen Signals zurück zu dem Sensor zur Überwachung der Position des Schließkörpers (28).

6. Feuerlöschanlagenventil (2) nach einem der vorhergehenden Ansprüche,
**dadurch gekennzeichnet, dass** die Sensorvorrichtung (18) mindestens einen kapazitiven Sensor zur Positionsüberwachung des Schließkörpers (28) aufweist.

7. Feuerlöschanlagenventil (2) nach einem der vorhergehenden Ansprüche,
**dadurch gekennzeichnet, dass** die Sensorvorrichtung (18) mindestens einen Winkelsensor zur Positionsüberwachung des Schließkörpers (28) aufweist, wobei ein korrespondierender Drehwinkelgeber insbesondere an der Achse (36) des Schließkörpers (28) angeordnet ist.

8. Feuerlöschanlagenventil (2) nach einem der vorstehenden Ansprüche,
**dadurch gekennzeichnet, dass** die Sensorvorrichtung (18) innerhalb des Gehäuses, insbesondere teilweise oder vollständig in der Fluideintrittskammer (26) oder der Fluidaustrittskammer (24) angeordnet ist.

9. Feuerlöschanlagenventil (2) nach einem der vorhergehenden Ansprüche,
**dadurch gekennzeichnet, dass** die Sensorvorrichtung (18) dazu eingerichtet ist, ein elektrisches Signal zu generieren, wenn der Schließkörper (28) seine Sperrposition (32) verlässt.

10. Feuerlöschanlagenventil (2) nach einem der vorhergehenden Ansprüche,
**dadurch gekennzeichnet, dass** die Sensorvorrichtung (18) eine Verzögerungseinrichtung zur Verzögerung einer Weiterleitung des elektrischen Signals um eine vordefinierte Verzögerungsdauer aufweist.

11. Feuerlöschanlagenventil (2) nach Anspruch 10, wobei die Verzögerungseinrichtung dazu eingerichtet ist, das elektrische Signal weiterzuleiten, wenn die Sensorvorrichtung (18) für eine vordefinierte Mindestdauer das Verlassen der Sperrposition (32) durch den Schließkörper (28) sensiert.

12. Feuerlöschanlagenventil (2) nach einem der vorhergehenden Ansprüche,
**dadurch gekennzeichnet, dass** das Gehäuse (4) eine Aussparung (30) zur Aufnahme der Sensorvorrichtung (18) aufweist, welche eine Öffnung zu der Fluideintrittskammer (26) oder der Fluidaustrittskammer (24) freigibt, und die Sensorvorrichtung (18) in der Aussparung (30) angeordnet ist und die Aussparung (30) fluiddicht verschließt.

13. Verfahren zur Überwachung der Position eines Schließkörpers (28) eines Feuerlöschanlagenventils (2), insbesondere nach einem der vorstehenden Ansprüche, mit
einem Gehäuse (4),
einer in dem Gehäuse (4) vorgesehenen Fluideintrittskammer (26),
einer in dem Gehäuse (4) vorgesehenen Fluidaustrittskammer (24),
wobei der Schließkörper (28) zwischen einem Sperrzustand (32) und einem Freigabezustand (34) hin und her bewegbar ist, im Sperrzustand (32) eine unmittelbare Fluidströmung zwischen der Fluideintrittskammer (26) und der Fluidaustrittskammer (24) unterbindet und in der Freigabestellung (34) die Fluideintrittskammer (26) mit der Fluidaustrittskammer (24) unmittelbar fluidleitend verbindet, umfassend die Schritte:
- unmittelbares redundantes Überwachen der Position des Schließkörpers mittels zweier unterschiedlicher Sensoren (20, 22), welche ausgewählt sind aus der Liste: Magnetsensor, induktiver Sensor, optischer Sensor, kapazitativer Sensor und Drehwinkelsensor,
- Erzeugen eines repräsentativen Signals mittels der Sensorvorrichtung (18), sobald der Schließkörper sich vom Sperrzustand in den Freigabezustand bewegt, und vorzugsweise:
- Weiterleiten des repräsentativen Signals an eine Auswerteinheit, insbesondere eine Brandmelde- und/oder Löschsteuerzentrale.

## Claims

1. A fire-extinguishing-system valve (2)
having a housing (4),
having a fluid-entry chamber (26) provided in the housing (4),
having a fluid-exit chamber (24) provided in the housing (4),
and having a closing body (28) which can be moved back and forth between a blocking state (32) and a release state (34) and, in the blocking state (32) prevents direct fluid flow between the fluid-entry chamber (26) and the fluid-exit chamber (24) and, in the release position (34), connects the fluid-entry chamber (26) to the fluid-exit chamber (24) directly for fluid-conducting action,
wherein the fire-extinguishing-system valve (2) has a sensor device (18) for directly monitoring the position of the closing body (28),
**characterized in that** the sensor device (18) has at least two different sensors (20, 22) for monitoring the position of the closing body (28) in redundant fashion, selected from the following list: magnetic sensor, inductive sensor, optical sensor, capacitive sensor and angle-of-rotation sensor.

2. The fire-extinguishing-system valve as claimed in claim 1,
**characterized in that** the sensor device (18) has at least one magnetic sensor.

3. The fire-extinguishing-system valve as claimed in claim 2,
**characterized in that** the magnetic sensor has one or more reed switches, or
is designed in the form of a Hall-effect sensor or in the form of a magnetoresistive sensor.

4. The fire-extinguishing-system valve as claimed in one of the preceding claims, **characterized in that** the sensor device (18) has at least one inductive sensor for monitoring the position of the closing body (28), and the closing body (28) has a metallic portion which is intended to generate an electric voltage in the inductive sensor when the closing body (28) moves.

5. The fire-extinguishing-system valve (2) as claimed in one of the preceding claims,
**characterized in that** the sensor device (18) has at least one optical sensor for monitoring the position of the closing body (28), wherein the closing body (28) has arranged on it an optical reflector for interacting with the optical sensor, in particular so that an optical signal generated by the optical sensor can be reflected back to the sensor for monitoring the position of the closing body (28).

6. The fire-extinguishing-system valve (2) as claimed in one of the preceding claims,
**characterized in that** the sensor device (18) has at least one capacitive sensor for monitoring the position of the closing body (28).

7. The fire-extinguishing-system valve (2) as claimed in one of the preceding claims,
**characterized in that** the sensor device (18) has at least one angle sensor for monitoring the position of the closing body (28), wherein a corresponding rotary encoder is arranged, in particular, on the pin (36) of the closing body (28).

8. The fire-extinguishing-system valve (2) as claimed in one of the preceding claims,
**characterized in that** the sensor device (18) is arranged within the housing, in particular partially or fully in the fluid-entry chamber (26) or the fluid-exit chamber (24).

9. The fire-extinguishing-system valve (2) as claimed in one of the preceding claims,
**characterized in that** the sensor device (18) is intended to generate an electrical signal when the closing body (28) leaves its blocking position (32).

10. The fire-extinguishing-system valve (2) as claimed in one of the preceding claims,
**characterized in that** the sensor device (18) has a delay device for delaying onward transfer of the electrical signal by a predefined delay period.

11. The fire-extinguishing-system valve (2) as claimed in claim 10, wherein the delay device is intended to transfer the electrical signal onward when the sensor device (18) senses that the closing body (28) has left the blocking position (32) for a predefined minimum period.

12. The fire-extinguishing-system valve (2) as claimed in one of the preceding claims,
**characterized in that** the housing (4) has an aperture (30) for accommodating the sensor device (18), said aperture releasing an opening to the fluid-entry chamber (26) or the fluid-exit chamber (24), and the sensor device (18) is arranged in the aperture (30) and closes the aperture (30) in a fluid-tight manner.

13. A method for monitoring the position of a closing body (28) of a fire-extinguishing-system valve (2), in particular as claimed in one of the preceding claims, having a housing (4),
having a fluid-entry chamber (26) provided in the housing (4),
having a fluid-exit chamber (24) provided in the housing (4),
wherein the closing body (28) can be moved back and forth between a blocking state (32) and a release state (34) and, in the blocking state (32), prevents direct fluid flow between the fluid-entry chamber (26) and the fluid-exit chamber (24) and, in the release position (34), connects the fluid-entry chamber (26) to the fluid-exit chamber (24) directly for fluid-conducting action, comprising the following steps:
- monitoring the position of the closing body directly by means of two different sensors (20, 22) in redundant fashion, which are selected from the following list: magnetic sensor, inductive sensor, optical sensor, capacitive sensor and angle-of-rotation sensor,
- generating a representative signal by means of the sensor device (18) as soon as the closing body moves from the blocking state into the release state, and preferably:
- transferring the representative signal onward to an evaluation unit, in particular a fire-alarm and/or extinguishing control panel.

## Revendications

1. Vanne d'installation d'extinction d'incendie (2), avec
un boîtier (4),
une chambre d'entrée de fluide (26) prévue dans le boîtier (4),
une chambre de sortie de fluide (24) prévue dans le boîtier (4),
un corps de fermeture (28) mobile en va-et-vient entre un état de blocage (32) et un état de libération (34), lequel, dans l'état de blocage (32), empêche un écoulement de fluide direct entre la chambre d'entrée de fluide (26) et la chambre de sortie de fluide (24) et, dans la position de libération (34), relie directement de manière fluidique la chambre d'entrée de fluide (26) à la chambre de sortie de fluide (24),
dans laquelle la vanne d'installation d'extinction d'incendie (2) présente un dispositif capteur (18) pour surveiller directement la position du corps de fermeture (28),
**caractérisée en ce que** le dispositif capteur (18) présente au moins deux capteurs (20, 22) différents pour la surveillance redondante de la position du corps de fermeture (28), sélectionnés dans la liste : capteur magnétique, capteur inductif, capteur optique, capteur capacitif et capteur d'angle de rotation.

2. Vanne d'installation d'extinction d'incendie selon la revendication 1,
**caractérisée en ce que** le dispositif capteur (18) présente au moins un capteur magnétique.

3. Vanne d'installation d'extinction d'incendie selon la revendication 2,
**caractérisée en ce que** le capteur magnétique présente un ou plusieurs contacts Reed, ou
est réalisé en tant que capteur Hall ou capteur magnétorésistif.

4. Vanne d'installation d'extinction d'incendie selon l'une quelconque des revendications précédentes,
**caractérisée en ce que** le dispositif capteur (18) présente au moins un capteur inductif pour la surveillance de la position du corps de fermeture (28), et le corps de fermeture (28) présente une section métallique qui est configurée pour générer une tension électrique dans le capteur inductif lors du mouvement du corps de fermeture (28).

5. Vanne d'installation d'extinction d'incendie (2) selon l'une quelconque des revendications précédentes,
**caractérisée en ce que** le dispositif capteur (18) présente au moins un capteur optique pour la surveillance de la position du corps de fermeture (28), dans laquelle un réflecteur optique est disposé sur le corps de fermeture (28) pour interagir avec le capteur optique, en particulier pour réfléchir un signal optique, généré par le capteur optique, vers le capteur pour la surveillance de la position du corps de fermeture (28).

6. Vanne d'installation d'extinction d'incendie (2) selon l'une quelconque des revendications précédentes,
**caractérisée en ce que** le dispositif capteur (18) présente au moins un capteur capacitif pour la surveillance de la position du corps de fermeture (28).

7. Vanne d'installation d'extinction d'incendie (2) selon l'une quelconque des revendications précédentes,
**caractérisée en ce que** le dispositif capteur (18) présente au moins un capteur d'angle pour la surveillance de la position du corps de fermeture (28), dans laquelle un capteur d'angle de rotation correspondant est disposé en particulier sur l'axe (36) du corps de fermeture (28).

8. Vanne d'installation d'extinction d'incendie (2) selon l'une quelconque des revendications précédentes,
**caractérisée en ce que** le dispositif capteur (18) est disposé à l'intérieur du boîtier, en particulier partiellement ou entièrement dans la chambre d'entrée de fluide (26) ou la chambre de sortie de fluide (24).

9. Vanne d'installation d'extinction d'incendie (2) selon l'une quelconque des revendications précédentes,
**caractérisée en ce que** le dispositif capteur (18) est configuré pour générer un signal électrique lorsque le corps de fermeture (28) quitte sa position de blocage (32).

10. Vanne d'installation d'extinction d'incendie (2) selon l'une quelconque des revendications précédentes,
**caractérisée en ce que** le dispositif capteur (18) présente un système de temporisation pour retarder une transmission du signal électrique d'une durée de temporisation prédéfinie.

11. Vanne d'installation d'extinction d'incendie (2) selon la revendication 10, dans laquelle le système de temporisation est configuré pour transmettre le signal électrique lorsque le dispositif capteur (18) détecte que le corps de fermeture (28) a quitté la position de blocage (32) pendant une durée minimale prédéfinie.

12. Vanne d'installation d'extinction d'incendie (2) selon l'une quelconque des revendications précédentes,
**caractérisée en ce que** le boîtier (4) présente un évidement (30), pour recevoir le dispositif capteur (18), qui libère une ouverture vers la chambre d'entrée de fluide (26) ou la chambre de sortie de fluide (24), et le dispositif capteur (18) est disposé dans l'évidement (30) et ferme l'évidement (30) de manière étanche aux fluides.

13. Procédé de surveillance de la position d'un corps de fermeture (28) d'une vanne d'installation d'extinction d'incendie (2), en particulier selon l'une quelconque des revendications précédentes, avec
un boîtier (4),
une chambre d'entrée de fluide (26) prévue dans le boîtier (4),
une chambre de sortie de fluide (24) prévue dans le boîtier (4),
dans lequel le corps de fermeture (28) est mobile en va-et-vient entre un état de blocage (32) et un état de libération (34), empêche un écoulement de fluide direct dans l'état de blocage (32) entre la chambre d'entrée de fluide (26) et la chambre de sortie de fluide (24) et relie directement de manière fluidique dans la position de libération (34) la chambre d'entrée de fluide (26) à la chambre de sortie de fluide (24), comprenant les étapes :
- de surveillance redondante directe de la position du corps de fermeture au moyen de deux capteurs (20, 22) différents qui sont sélectionnés dans la liste : capteur magnétique, capteur inductif, capteur optique, capteur capacitif et capteur d'angle de rotation,
- de production d'un signal représentatif au moyen du dispositif capteur (18) dès que le corps de fermeture se déplace de l'état de blocage dans l'état de libération, et de préférence :
- de transmission du signal représentatif à une unité d'analyse, en particulier une centrale de détection d'incendie et/ou de commande d'extinction.
